# EUROPÄISCHE PATENTSCHRIFT

(11) **EP 1 395 614 B1**
(45) Veröffentlichungstag und Bekanntmachung des Hinweises auf die Patenterteilung: **09.03.2005**
(21) Anmeldenummer: 02737966.8
(22) Anmeldetag: 17.04.2002
(51) Int. Cl.: C08F 2/22

(54) **VERFAHREN ZUR HERSTELLUNG EINER WÄSSRIGEN POLYMERDISPERSION DURCH RADIKALISCHE WÄSSRIGE EMULSIONSPOLYMERISATION MIT EINER KONTINUIERLICH HERGESTELLTEN WÄSSRIGEN MONOMERENEMULSION**
METHOD FOR PRODUCING AN AQUEOUS POLYMER DISPERSION BY RADICAL AQUEOUS EMULSION POLYMERIZATION WITH A CONTINUALLY PRODUCED AQUEOUS MONOMER EMULSION
PROCEDE POUR PREPARER UNE DISPERSION POLYMERE AQUEUSE PAR POLYMERISATION RADICALAIRE EN EMULSION AQUEUSE AU MOYEN D'UNE EMULSION MONOMERE AQUEUSE PRODUITE EN CONTINU

(30) Priorität: 19.04.2001 DE 10119330
(43) Veröffentlichungstag der Anmeldung: 10.03.2004
(73) Patentinhaber: BASF AKTIENGESELLSCHAFT, 67056 Ludwigshafen (DE)
(72) Erfinder: KELLER, Andreas, 67459 Böhl-Iggelheim (DE); SCHACKERT, Werner, 67105 Schifferstadt (DE); WILBURG, Gerald, 67346 Speyer (DE); WOLF, Heiko, 67227 Frankenthal (DE)
(86) Internationale Anmeldenummer: PCT/EP2002/004247
(87) Internationale Veröffentlichungsnummer: WO 2002/085955

(56) Entgegenhaltungen:
- EP-A- 0 373 439
- DE-A- 19 648 744
- DE-A- 19 809 220

## Beschreibung

Die vorliegende Erfindung betrifft ein Verfahren zur Herstellung einer wässrigen Polymerdispersion durch radikalische Emulsionspolymerisation einer wässrigen Monomerenemulsion mit einer kontinuierlich hergestellten wässrigen Monomerenemulsion.

Allgemein unterscheidet man bei der Herstellung von wässrigen Polymerdispersionen durch Emulsionspolymerisation Batch-, Semibatch- und kontinuierliche Verfahren, wobei verschiedene Methoden der Zugabe der Monomeren in den Reaktionsbehälter beschrieben werden.

In Kirk-Othmer, Encyclopedia of Chemical Technology, 3. Aufl., Bd. 1, S. 397 ff. ist ein Semibatch-Verfahren zur Emulsionspolymerisation am Beispiel der großtechnischen Polymerisation von Acrylestern beschrieben. Dabei wird eine in einem separaten Ansatzkessel hergestellte Monomerenemulsion kontinuierlich in den Polymerisationsreaktor gegeben, dort mit einer wässrigen Initiatorlösung versetzt und polymerisiert.

In Kirk-Othmer, Encyclopedia of Chemical Technology, 3. Aufl., Bd. 14, S. 92 ff. findet sich eine vergleichende Übersicht von Batch-, Semibatch- und kontinuierlichen Verfahren bei der Emulsionspolymerisation. Nach einer allgemeinen Vorgehensweise für ein Semibatch-Verfahren kann der Emulsionszulauf alle für die Emulsionspolymerisation verwendeten Inhaltsstoffe, wie z.B. Monomere, oberflächenaktive Stoffe, Wasser und Regler, enthalten, wobei die wässrige Monomerenemulsion in einem separaten Ansatzkessel, dem sogenannten Feed-Tank, hergestellt wird. Der Initiator aber darf hierbei nicht in die Monomerenemulsion eingemischt werden, da dann eine Polymerisation im Feed-Tank erfolgen könnte.

In der Encyclopedia of Polymer Science and Engineering, Bd. 6, S. 10 ff. (1986), sind ebenfalls Batch-, Semibatch- und kontinuierliche Reaktoren für die Emulsionspolymerisation beschrieben. wie schon zuvor wird als mögliche Variante des Batch- und Semibatch-Verfahrens die Herstellung einer wässrigen Monomerenemulsion in einem separaten Ansatzkessel beschrieben, die alle Emulsionsbestandteile mit Ausnahme des Initiators enthalten kann. Dieser wird in einem separaten Feed direkt in den Polymerisationsreaktor gegeben. Bei den beschriebenen kontinuierlichen Verfahren werden die Monomeren, entweder ohne vorherige Emulgierung zusammen mit der wässrigen Phase, oder in Form einer wässrigen Monomerenemulsion, die separat auf Vorrat hergestellt wird, dem(den) Reaktor(en) kontinuierlich zugeführt.

Semibatch-Verfahren, bei denen ein kontinuierlicher Feed einem Rührreaktor zugeführt, während der Reaktion aber kein Produkt entnommen wird, sind gegenüber den Batch-Verfahren bevorzugt. So können die Zusammensetzung des Feed und die Erstbefüllung einfach variiert und somit eine Vielzahl verschiedener Dispersionen in ein und demselben Reaktor hergestellt werden. Neben diesen Vorzügen liegen weitere Vorteile des Semibatch-Verfahrens in ihrer erhöhten Sicherheit auf Grund der, im Vergleich zum Batch-Verfahren, jeweils nur geringen Monomerenmengen im Reaktor und einer besseren Abfuhr der Reaktionswärme, insbesondere bei Dispersionen, bei denen es während der Polymerisation zu einem starken Viskositätsanstieg kommt. Des weiteren ist die mögliche Regelung der Zulaufgeschwindigkeiten der Monomeren oder der Monomerenemulsion und somit eine verbesserte Reaktionskontrolle vorteilhaft.

Die Zuführung der Monomeren in den Polymerisationsreaktor kann beim Semibatch-Verfahren z.B. separat von der Zuführung des Initiators in reiner Form als einziger Zulauf erfolgen, wie z.B. in der EP-A-0 575 625 beschrieben. Weitere Verfahren zur Zugabe der Monomeren in den Polymerisationsreaktor sind, wie ebenfalls zuvor beschrieben, die gemeinsame Zugabe mit der wässrigen Phase ohne vorherige Emulgierung und die Zugabe einer in einem separaten Ansatzkessel hergestellten Monomerenemulsion.

Dabei weisen Verfahren des Standes der Technik unter Zugabe der Monomeren in nicht emulgierter oder reiner Form die folgenden Nachteile auf:
a) Die zum Emulgieren der Monomeren erforderliche Energie muß vom Rührer des Polymerisationsreaktors aufgebracht werden. Dies erfordert entweder den Einsatz spezieller, teurer, teilweise komplizierter und schwer zu reinigender Rührer oder eine Erhöhung des Leistungseintrags in die Reaktionsmasse durch Erhöhung der Rührerdrehzahl oder Verwendung größerer Rührer. Letztere Maßnahmen führen zu einer erhöhten Scherbelastung der Dispersionen und somit zu einer vermehrten Koagulat-Bildung.
b) Bei einer unzureichenden Emulgierung im Reaktor kann es zur Ausbildung einer reinen Monomerenphase im Reaktor kommen, d.h. das spezifisch leichtere, noch nicht abreagierte Monomer bildet eine zusammenhängende, auf der übrigen Reaktionsmasse aufschwimmende Schicht. Nach Beendigung des Emulsionszulaufs entfällt die Kühlwirkung der kalten Zuläufe und es kann zu einem starken Temperaturanstieg im Kesselinneren durch Abreagieren dieser konzentrierten Monomerenphase kommen. Zudem führt die Reaktion einer solchen konzentrierten Monomerenphase zu einer erhöhten Koagulatbildung und zu einer starken Polymerabscheidung an den Reaktorwänden und -einbauten sowie an den Rührern.

Die dem Stand der Technik angehörenden zuvor beschriebenen Semibatch-Verfahren, bei denen eine wässrige Monomerenemulsion dem Polymerisationsreaktor kontinuierlich zugeführt wird, erfordern alle die Herstellung und Bereitstellung dieser Emulsion in einem separaten Kessel vor Reaktionsbeginn. Diese Verfahrensvariante weist jedoch die folgenden Nachteile auf:
a) Der Initiator kann nicht mit in die Monomerenemulsion eingemischt werden, da dann mit einer Polymerisation im Zulaufgefäß zu rechnen ist. Eine getrennte Initiatorzufuhr in den Reaktor bedingt jedoch eine lokal erhöhte Elektrolytkonzentration an der Einlaufstelle, was zu vermehrter unerwünschter Koagulatbildung führt.
b) Die für die wässrige radikalische Emulsionspolymerisation verwendeten Emulsionen sind thermodynamisch nicht stabil, d.h. es kann zu einer Entmischung der Monomerenemulsion durch Koaleszenz der Monomerentröpfchen und zur Ausbildung einer Monomerenphase im Zulaufgefäß kommen. Dabei wird gleichzeitig Emulgator freigesetzt, der im Reaktor Mizellen bilden und somit das Wachstum einer weiteren unerwünschten Teilchengeneration initiieren kann. Zudem bedingt die Zufuhr einer gebildeten reinen Monomerenphase am Ende des Zulaufs die zuvor beschriebenen Probleme durch starken Temperaturanstieg, erhöhte Koagulatbildung und Reaktorverunreinigung.
c) Bei der Herstellung höher konzentrierter Dispersionen muß die dem Polymerisationsreaktor zugeführte wässrige Monomerenemulsion einen hohen Monomergehalt aufweisen. Dies führt im allgemeinen zu Emulsionen mit einer hohen Viskosität und somit zu Problemen bei der Förderung dieser Emulsionen. Weiterhin neigen besonders hochkonzentrierte wässrige Monomerenemulsionen zum Entmischen bzw. Brechen der Emulsion.

In keiner der zuvor genannten Schriften findet sich ein Hinweis auf die Verwendung einer kontinuierlich hergestellten wässrigen Monomerenemulsion bei der radikalischen wässrigen Emulsionspolymerisation zur Herstellung von Polymerdispersionen.

Durch die vom Anmelder eingereichte Anmeldung DE-A 19648744 wurde ein Verfahren zur Verfügung gestellt, durch welches sich die zuvor beschriebenen Nachteile, insbesondere die vermehrte Koagulatbildung, die Verschmutzung des Polymerisationskessels sowie ein Temperaturanstieg kurz vor oder nach dem Ende der Monomerenzugabe vermeiden lassen. Verfahrenswesentlich für dieses Verfahren ist, dass die Monomerenemulsion nach Maßgabe des Verbrauchs kontinuierlich hergestellt wird, wobei die Komponenten der Monomerenemulsion mittels einer Mischvorrichtung zur Emulsion vermischt werden. Als geeignete Mischer werden insbesondere statische und dynamische Mischer unterschiedlichster Bauart genannt, welche in beliebiger Reihenfolge, Anordnung und Kombination verwendet werden können.

Aufgabe der vorliegenden Erfindung war es, das in der vorgenannten Anmeldung beschriebene Verfahren weiter zu verbessern und insbesondere den Koagulatgehalt der wässrigen Polymerdispersionen und die Verschmutzung des Polymerisationskessels durch Polymerbeläge weiter zu reduzieren.

Die Aufgabe wurde nun überraschenderweise dadurch gelöst, dass die nach Maßgabe ihres Verbrauchs kontinuierlich hergestellte wässrige Monomerenemulsion mittels einer Mischvorrichtung erzeugt wird, welche wenigstens eine Düse, ausgewählt aus Vollkegeldüse, Hohlkegeldüse, Flachstrahldüse, Glattstrahldüse, Injektordüse, Ejektordüse, Spiraldüse, Prallstrahldüse, Zweistoffdüse oder Emulgierblende, umfasst.

Gegenstand der Erfindung ist somit ein verfahren zur Herstellung einer wässrigen Polymerdispersion durch radikalische Emulsionspolymerisation einer wässrigen Monomerenemulsion, wobei die Monomerenemulsion nach Maßgabe des Verbrauchs kontinuierlich durch Vermischen ihrer Komponenten mittels einer Mischvorrichtung hergestellt wird, die dadurch gekennzeichnet ist, dass sie wenigstens eine Düse, ausgewählt aus Vollkegeldüse, Hohlkegeldüse, Flachstrahldüse, Glattstrahldüse, Injektordüse, Ejektordüse, Spiraldüse, Prallstrahldüse, Zweistoffdüse oder Emulgierblende, umfasst.

Zur Herstellung von Emulsionen mittels Düsen ist im Stand der Technik ein Verfahren zur Erzeugung von pharmazeutischen oder kosmetischen Emulsionen unter Verwendung eines speziellen Strahldispergators in der EP-A 101007 beschrieben. Ein weiteres Verfahren zur Vermischung schwer mischbarer Fluide zur Bildung einer Emulsion wird in der DE-A 4128999 offenbart. Kern der Anmeldung ist ein Verfahren, bei dem zwei nicht ineinander lösliche flüssige Phasen in Form dünner, flacher Schichten im Gegenstrahl unter Bildung einer Emulsion zusammengeführt werden. In keinem der beiden Dokumente wird jedoch die Herstellung von wässrigen Monomerenemulsionen und deren Verwendung zur Herstellung wässriger Polymerdispersionen offenbart oder nahegelegt.

Das erfindungsgemäße Verfahren eignet sich zur Herstellung von Homo- und Copolymerisaten, so dass der Mischvorrichtung zur kontinuierlichen Herstellung der Monomerenemulsion mindestens ein monomerhaltiger Zulauf zugeführt wird. Die Zuführung mehrerer Monomerer kann separat oder in Gemischen erfolgen, die z.B. durch Zusammenführen der Einzelzuläufe in einer gemeinsamen Rohrleitung erzeugt werden können.

Dabei können die Monomeren in reiner Form (Ölphase) oder zusammen mit Wasser der Mischvorrichtung zugeführt werden. Vorzugsweise wird wasserhaltigen Monomerenzuläufen bereits vor Eintritt in die Mischvorrichtung zur Herstellung der Monomerenemulsion wenigstens ein Dispergiermittel zugesetzt.

Die Zugabe des Initiators erfolgt über einen separaten Zulauf, im allgemeinen in wässriger Phase, wobei jedoch Monomerenzulauf und Initiatorzulauf vor Eintritt in die Mischvorrichtung vereinigt werden können. Der Initiator kann auch unabhängig von der Monomerenemulsion direkt in den Reaktor gegeben werden.

Die Zugabe der übrigen Komponenten der Monomerenemulsion, die im folgenden noch genauer definiert werden, erfolgt je nach Verträglichkeit gemeinsam mit einem der vorgenannten Zuläufe oder separat in reiner Form, als Lösung in Wasser oder einem geeigneten Lösungsmittel.

Vorzugsweise werden bei Ausführung des erfindungsgemäßen Verfahrens als Semibatch-Verfahren ein Teil der wässrigen Phase sowie gegebenenfalls eines oder mehrere der Monomeren und/oder der übrigen Komponenten der Monomerenemulsion im Reaktor vorgelegt.

Die Zuführung der Komponenten in die Mischvorrichtung kann nach üblichen Verfahren erfolgen. Dazu zählt z.B. die direkte Zugabe aller Komponenten oder die Bildung geeigneter Vormischungen.

Nach einer geeigneten Ausführungsform des erfindungsgemäßen Verfahrens zur Herstellung von Copolymerisaten kann z.B. eine Mischung aus einem oder mehreren wasserlöslichen Monomeren, wenigstens einem Dispergiermittel und gegebenenfalls weiteren Additiven als erstem Zulauf mit einer wässrigen Lösung eines Initiators als zweitem Zulauf zusammengeführt werden, z.B. in einem gemeinsamen Rohrleitungsstück. Zu dieser Mischung kann dann z.B. mindestens ein wasserunlösliches Monomer in reiner Form (Ölphase) als drittem Zulauf, gegebenenfalls über eine Dosiervorrichtung, gegeben werden. Die Mischung der drei Zuläufe wird in einer Mischvorrichtung, wie im folgenden ausführlich beschrieben, nach Maßgabe des Verbrauchs kontinuierlich emulgiert und direkt dem Reaktionsgefäß zugeführt.

Als Mischvorrichtung zur kontinuierlichen Herstellung der wässrigen Monomerenemulsion können im erfindungsgemäßen Verfahren auch einer oder mehrere der in der DE-A 19648744 beschriebenen Mischer mitverwendet werden, wobei es sich um Mischer gleicher oder verschiedener Bauart handeln kann, die in beliebiger Reihenfolge, Anordnung und Kombination verwendet werden, wie z.B. Reihenanordnung aller Mischer, Kombination aus Parallel- und Reihenanordnung oder Parallelanordnung aller Mischer. Werden mehrere Mischer verwendet, so ist die Reihenanordnung bevorzugt. Verfahrenswesentlich ist jedoch, dass die Mischvorrichtung wenigstens einen, eine Düse, ausgewählt aus Vollkegeldüse, Hohlkegeldüse, Flachstrahldüse, Glattstrahldüse, Injektordüse, Ejektordüse, Spiraldüse, Prallstrahldüse, Zweistoffdüse oder Emulgierblende, umfassenden Mischer, umfasst. Insbesondere bevorzugt ist eine Mischeranordnung, bei der der die Düse umfassende Mischer der Mischer ist, welcher die gebrauchsfertige Monomerenemulsion unmittelbar vor Einleitung in den Polymerisationskessel 'inline' bildet.

Erfindungsgemäß werden hierfür bevorzugt Spiraldüsen, Injektordüsen oder Ejektordüsen verwendet. Insbesondere bevorzugt sind jedoch Injektordüsen.

Günstig ist es, wenn die Mischvorrichtung wenigstens eine der vorgenannten Düsen und eine Mischkammer umfasst. Von besonderem Vorteil ist es, wenn die Düse und die Mischkammer derart angeordnet sind, dass die Komponenten der wässrigen Monomerenemulsion zuerst durch die Düse und direkt daran anschließend durch die Mischkammer geleitet werden.

Die Dimensionierung der zu verwendenden Düse ist u.a. abhängig vom Düsentyp, vom Volumenstrom der zu mischenden Komponenten, deren Viskosität, deren Temperatur, der Druckdifferenz zwischen Düseneintritts- und Düsenaustrittsöffnung etc. und kann vom Fachmann in einfacher Weise abgeleitet (siehe hierzu beispielsweise M. Stang, Zerkleinern und Stabilisieren von Tropfen beim mechanischen Emulgieren, VDI-Fortschrittsberichte, Reihe 3, Verfahrenstechnik Nr. 527, VDI-Verlag 1998, Düsseldorf; R. Adler et al. in verfahrenstechnische Berechnungsmethoden Teil 5, Chemische Reaktoren - Ausrüstungen und Berechnungen, Deutscher Verlag für Grundstoffindustrie, Leipzig, 1979) oder in einfachen Vorversuchen ermittelt werden. In jedem Fall sind die Düsengröße und die sonstigen Bedingungen so zu wählen, dass es beim Durchtritt der zu mischenden Komponenten durch die Düse zu einer Verdüsung der nichtwässrigen Komponenten in der wässrigen Phase unter Ausbildung einer stabilen wässrigen Monomerenemulsion kommt. Dies ist insbesondere dann gegeben, wenn die Druckdifferenz zwischen Düseneintritts- und Düsenaustrittsöffnung wenigstens 0,5 bar beträgt. Häufig wird eine wesentlich höhere Druckdifferenz eingestellt, beispielsweise ≥ 1 bar, ≥ 5 bar, ≥ 10 bar, ≥ 20 bar, ≥ 50 bar, ≥ 100 bar, ≥ 500 bar, ≥ 1000 bar oder sogar bis zu 2000 bar und alle Werte dazwischen.

Falls erforderlich, kann die Mischvorrichtung mehrere unterschiedlich dimensionierte Düsen enthalten, durch die der Volumenstrom der Komponenten gezielt zur Ausbildung einer Emulsion geleitet werden kann. Dies ist insbesondere dann von Vorteil, wenn im Laufe der Emulsionspolymerisation stark unterschiedliche Volumenströme der Monomerenemulsion benötigt werden. Insbesondere am Beginn und am Ende der Emulsionspolymerisation werden häufig kleinere Volumenströme der Monomerenemulsion benötigt. Durch eine geeignete mess- und regeltechnische Schaltung oder manuell lässt sich dann immer die Düse bzw. eine Kombination zweier oder mehrerer in Reihe oder parallel geschalteter Düsen ansteuern, welche die optimale Verdüsung unter Ausbildung einer stabilen Monomerenemulsion gewährleistet.

Günstig ist es, wenn an der Düsenaustrittsöffnung ein sogenannter Diffusor angebracht ist, welcher durch seine annähernd kegelförmige Form die Bildung der wässrigen Monomerenemulsion unterstützt und für deren gleichmäßigen und gezielten Abtransport von der Düse sorgt. Ist der Diffusor von der gebildeten wässrigen Monomerenemulsion umspült, wie es beispielsweise dann der Fall ist, wenn der Diffusor in ein Rohr oder eine Mischkammer hineinragt, welche(s) einen größeren Querschnitt als der größte Querschnitt des Diffusors aufweist, so kann der Mischeffekt dadurch verstärkt werden, indem zwischen der Düsenaustrittsöffnung und der Diffusoreintrittsöffnung ein Spalt ausgebildet ist oder indem ein Diffusor verwendet wird, der in seinem ersten schmalen Längendrittel (beginnend an der Diffusoreintrittsöffnung) eine oder mehrere Öffnungen oder Durchtritte aufweist.

Der Mischvorgang wird weiter verbessert, wenn die aus der Düse austretende wässrige Monomerenemulsion zuerst durch eine nachgeschaltete Mischkammer und erst dann in der Polymerisationsreaktor geleitet wird. Die Form der Mischkammer ist von untergeordneter Bedeutung. Wesentlich ist, dass deren Innenvolumen derart bemessen ist, dass es bei einem gegebenen Volumenstrom pro Stunde im Mittel zu wenigstens einem vollständigem Austausch des Mischkammerinhalts kommt. Günstiger ist jedoch ein Volumen, welches höhere Austauschraten, wie beispielsweise wenigstens einen 5-, 10-, 20-, 50-, 100-, 200-, 400-, 600- oder 1000-fachen Austausch pro Stunde, gewährleistet. Als günstig hat es sich erwiesen, wenn die minimale Querschnittsfläche der Mischkammer wenigstens das 200-, 350-, 500- oder 1000-fache der Düsenquerschnittsfläche und die minimale Länge der Mischkammer wenigstens das 20-, 40, 60-, 80- oder 100-fache der Quadratwurzel der Düsenquerschnittsfläche ist.

Für das erfindungsgemäße Verfahren geeignete wässrige Monomerenemulsionen umfassen
a) wenigstens ein ethylenisch ungesättigtes Monomer,
b) wenigstens ein Dispergiermittel,
c) gegebenenfalls wenigstens einen zur Initiierung wässriger Emulsionspolymerisationen geeigneten Initiator,
d) gegebenenfalls weitere Additive.

### Komponente a)

Für das erfindungsgemäße Verfahren brauchbare Monomere sind Mono- oder Diester ethylenisch ungesättigter C₃- bis C₆-Mono- oder Dicarbonsäuren mit C₁- bis C₂₀-Alkanolen oder -Diolen, Vinylester von C₁- bis C₂₀-Monocarbonsäuren, vinylaromatische Verbindungen, ethylenisch ungesättigte Nitrile, Vinylhalogenide, C₁- bis C₂₀-Alkylvinylether, C₂- bis C₈-Mono- und Diolefine, C₃- bis C₆-monoethylenisch ungesättigte Mono- oder Dicarbonsäuren, deren Salze oder deren Amide und N-Mono- oder N,N-Di-C₁-C₂₀-alkylamide oder Hydroxyalkylamide, N-Vinyllactame, ethylenisch ungesättigte Alkyl- oder Arylsulfonsäuren und/oder deren Salze, und Gemische verschiedener Monomere eines Typs und/oder verschiedener Typen.

Beispiele für geeignete Monomere sind Ester der Acrylsäure oder Methacrylsäure mit Methanol, Ethanol, n-Propanol, Isopropanol, n-Butanol, Isobutanol, sec.-Butanol, tert.-Butanol, Pentanol, Hexanol, 2-Ethylhexanol, Octanol, Decanol, Dodecanol oder Stearylalkohol, Vinylformiat, Vinylacetat, Vinylpropionat, Styrol, α-Methylstyrol, Acrylnitril, Methacrylnitril, Acrylsäure, Methacrylsäure, Acrylamid, Methacrylamid, Vinylchlorid, Vinylidenchlorid, Vinylethylether, Ethylen, Propylen, Butadien, Isopren, N-Vinylpyrrolidon, Vinylsulfonsäure und deren Alkalisalze, Acrylamidopropansulfonsäure und deren Alkalisalze, sulfoniertes Styrol und dessen Alkalisalze, Acrylsäure, Methacrylsäure, Maleinsäure, Fumarsäure, Itaconsäure, etc.

Beispiele für weitere Monomere a), die allgemein in untergeordnetem Maße vorliegen, umfassen N-Alkyl- und N-Hydroxyalkylamide der zuvor genannten, ethylenisch ungesättigten Carbonsäuren, die Diester zweiwertiger Alkohole mit den zuvor genannten, ethylenisch ungesättigten Monocarbonsäuren, die Vinyl- oder Allylester der ethylenisch ungesättigten Carbonsäuren, N,N'-Divinyl- oder N,N'-Diallylharnstoffderivate oder Divinylaromaten.

Besonders geeignete Monomerenkombinationen für das erfindungsgemäße Verfahren enthalten als Hauptmonomere beispielsweise n-Butylacrylat und Vinylacetat; n-Butylacrylat und Styrol; n-Butylacrylat und Ethylhexylacrylat; Butadien und Styrol; Butadien, Acrylnitril und/oder Methacrylnitril; Butadien, Isopren, Acrylnitril und/oder Methacrylnitril; Butadien und Acrylsäureester sowie Butadien und Methacrylsäureester. Alle genannten Monomerenkombinationen können darüber hinaus geringe Mengen weiterer Monomere, vorzugsweise Acrylsäure, Methacrylsäure, Acrylamid und/oder Methacrylamid enthalten.

### Komponente b)

Als wenigstens ein Dispergiermittel können Emulgatoren und/oder Schutzkolloide eingesetzt werden. Diese Substanzen werden üblicherweise in Mengen bis zu 10 Gew.-%, vorzugsweise 0,5 bis 5 Gew.-% und insbesondere 0,5 bis 3 Gew.-%, bezogen auf die zu polymerisierenden Monomere, eingesetzt.

Geeignete Schutzkolloide sind beispielsweise Polyvinylalkohole, Cellulosederivate oder Copolymerisate auf Basis von Vinylpyrrolidon. Geeignete Emulgatoren sind insbesondere anionische und nichtionische Emulgatoren, wie ethoxylierte Mono-, Di- und Trialkylphenole, Ethoxylate langkettiger Alkanole, Alkali- und Ammoniumsalze von Alkylsulfaten, von Schwefelsäurehalbestern ethoxylierter Alkanole und ethoxylierter Alkylphenole, von Alkylsulfonsäuren und von Alkylarylsulfonsäuren. Eine ausführliche Beschreibung von Schutzkolloiden und Emulgatoren findet sich in Houben-Weyl, Methoden der Organischen Chemie, Band XIV/1, Makromolekulare Stoffe, Georg-Thieme-Verlag, Stuttgart, 1961, S. 192-208 und 411-420.

Brauchbare nichtionische Emulgatoren sind araliphatische oder aliphatische nichtionische Emulgatoren, beispielsweise ethoxylierte Mono-, Di- und Trialkylphenole (Ethoxylierungsgrad: 3 bis 50, Alkylrest: C₄-C₁₀), Ethoxylate langkettiger Alkohole (Ethoxylierungsgrad: 3 bis 50, Alkylrest: C₈-C₃₆) sowie Polyethylenoxid/Polypropylenoxid-Blockcopolymere. Bevorzugt werden Ethoxylate langkettiger Alkanole (Alkylreste: C₁₀-C₂₂, Ethoxylierungsgrad 10 bis 50) und darunter besonders bevorzugt solche mit einem linearen C₁₂-C₁₈-Alkylrest und einem Ethoxylierungsgrad von 10 bis 50 sowie ethoxylierte Monoalkylphenole. Dabei beziehen sich die Angaben zum Ethoxylierungsgrad jeweils auf den mittleren Ethoxylierungsgrad.

Geeignete anionische Emulgatoren sind beispielsweise Alkali- und Ammoniumsalze von Alkylsulfaten (Alkylrest: C₈-C₁₂), von Schwefelsäurehalbestern ethoxylierter Alkanole (Ethoxylierungsgrad: 2 bis 50, Alkylrest: C₁₂-C₁₈) und ethoxylierter Alkylphenole (Ethoxylierungsgrad: 3 bis 50, Alkylrest: C₄-C₉), von Alkylsulfonsäuren (Alkylrest: C₁₂-C₁₈) und von Alkylarylsulfonsäuren (Alkylrest: C₉-C₁₈). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren sind ebenfalls Bis(phenylsulfonsäure)ether bzw. deren Alkali- oder Ammoniumsalze, die an einem oder beiden aromatischen Ringen eine C₄-C₂₄-Alkylgruppe tragen, geeignet. Diese Verbindungen sind allgemein bekannt, z.B. aus der US-A 4,269,749 und im Handel erhältlich, beispielsweise als Dowfax® 2A1 (Warenzeichen der Dow Chemical Company).

Geeignete kationische Emulgatoren sind vorzugsweise quartäre Ammoniumhalogenide, z.B. Trimethylcetylammoniumchlorid, Methyltrioctylammoniumchlorid, Benzyltriethylammoniumchlorid oder quartäre Verbindungen von N-C₆-C₂₀-Alkylpyridinen, N-C₆-C₂₀-Alkylmorpholinen oder N-C₆-C₂₀-Alkylimidazolen, z.B. N-Laurylpyridiniumchlorid.

### Komponente c)

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, z.B. Alkalimetallperoxodisulfate als auch um Azoverbindungen handeln. Es werden auch kombinierte Systeme verwendet, die aus wenigstens einem organischen oder anorganischen Reduktionsmittel und wenigstens einem Peroxid und/oder Hydroperoxid zusammengesetzt sind, z.B. tert.-Butylhydroperoxid mit dem Natriumsalz der Hydroxymethansulfinsäure oder Wasserstoffperoxid mit Ascorbinsäure. Auch werden kombinierte System verwendet, die eine geringe Menge einer im Polymerisationsmedium löslichen Metallverbindung enthalten, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumbisulfit und anstelle von wasserstoffperoxid tert.-Butylhydroperoxid oder Alkaliperoxodisulfate und/oder Ammoniumperoxodisulfat verwendet werden. Bevorzugte Initiatoren sind die Ammonium- oder Alkalimetallsalze von Peroxosulfaten oder Peroxodisulfaten, insbesondere Natrium- oder Kaliumperoxodisulfat. Vorzugsweise beträgt die Menge der eingesetzten radikalischen Initiatorsysteme, bezogen auf die Gesamtmenge der zu polymerisierenden Monomeren, 0,1 bis 3 Gew.-%.

### Komponente d)

Zur Kontrolle des Molekulargewichts können übliche Regler eingesetzt werden, beispielsweise Mercaptoverbindungen, wie Mercaptoethanol, Mercaptopropanol, Mercaptobutanol, Mercaptoessigsäure, Mercaptopropionsäure, Mercaptotrimethoxisilan, Butylmercaptan und tert.-Dodecylmercaptan. Geeignet sind auch organische Halogenverbindungen, wie Tetrachlorkohlenstoff oder Bromtrichlormethan. Weitere geeignete Additive sind z.B. den pH-Wert einstellende Mittel, Antioxidantien, Desodorantien, Biozide, Vernetzungsmittel, Farbstoffe, Pigmente, etc.

Die erfindungsgemäß hergestellte Emulsion wird in einem dafür geeigneten Reaktor polymerisiert. Dazu zählen z.B. gerührte Reaktoren, Kesselkaskaden und ungerührte Reaktoren, wie Rohrreaktoren. Die Emulsionspolymerisation der kontinuierlich hergestellten Monomerenemulsionen kann dann in einem Semibatch- oder einem kontinuierlichen verfahren erfolgen.

Erfolgt die Polymerisation nicht kontinuierlich, sondern als Semibatch-Verfahren, so kann die kontinuierliche Phase teilweise vorgelegt werden, d.h. der Reaktor wird anteilig mit Wasser und gegebenenfalls wenigstens einer oberflächenaktiven Substanz und/oder wenigstens einem Monomer befüllt.

Die Polymerisation kann auch unter Verwendung eines Saatlatex erfolgen, der im Falle einer Semibatch-Fahrweise zu Beginn der Reaktion im Reaktorgefäß hergestellt werden kann oder als Komponente den übrigen Komponenten der Monomerenemulsion vor Eintritt in die Mischvorrichtung zugegeben werden kann. Bei Verwendung eines Rohrreaktors kann der Saatlatex separat oder im ersten Teil des Reaktors hergestellt werden. Im letzteren Fall werden die zu polymerisierenden Monomere dann nach Bildung der Saat zugespeist.

Das erfindungsgemäße Verfahren eignet sich besonders zur Herstellung von Polymerdispersionen mit einem Feststoffgehalt von bis zu 75 Gew.-%, bevorzugt jedoch von 40 bis 60 Gew.-%. Dabei werden die aus dem Stand der Technik bekannten Nachteile, insbesondere infolge einer teilweisen oder vollständigen Entmischung von separat hergestellten (voremulgierten) Monomerenemulsionen, vermieden.

Die Erfindung wird anhand der folgenden nicht einschränkenden Beispiele erläutert.

### Beispiele

Um die vorteilhafte Herstellung der wässrigen Monomerenemulsion mittels einer Düse zu belegen, wurden die in den Beispielen angegebenen Komponenten ohne Vormischung über eine gemeinsame Zulaufleitung durch die Mischeinrichtung und direkt daran anschließend dem Polymerisationsgefäß zugeführt. Als Mischeinrichtung wurde erfindungsgemäß eine Injektordüse, Modell 803, Größe 1 der Fa. Düsen-Schlick GmbH, Untersiemau, Deutschland, eingebaut in einer zylindrischen Mischkammer mit einem Durchmesser von 40 mm und einer Länge von 250 mm und in den entsprechend durchgeführten vergleichsversuchen ein statischer Mischer bestehend aus 10 Mischelementen des Typs SMX-S der Fa. Sulzer Chemtech GmbH, Ober-Mörlen, Deutschland verwendet. In einem weiteren Vergleichsversuch wurde die wässrige Monomerenemulsion separat in einem 100 l-Rührkessel, ausgestattet mit einem Mehrstufen-Impuls-Gegenstromrührer (MIG-Rührer) bei 90 Umdrehungen pro Minute, hergestellt und direkt über eine Zulaufleitung in den Polymerisationsreaktor eindosiert.

### Analytik und Bewertung

Der Feststoffgehalt wurde bestimmt, indem eine aliquote Menge der wässrigen Polymerdispersion bei 140 °C in einem Trockenschrank bis zur Gewichtskonstanz getrocknet wurde. Es wurden zwei separate Messungen durchgeführt. Der angegebene Wert stellt den Mittelwert der beiden Meßergebnisse dar.

Die Bestimmung der Koagulatmenge erfolgte durch Filtration über ein Metallsieb mit einer Maschenweite von 45 µm. Hierzu wurden 100 g der wässrigen Polymerdispersion bei 20 bis 25 °C (Raumtemperatur) über das 45 µm-Sieb filtriert, welches vor der Filtration gewogen wurde. Nach der Filtration spülte man das Sieb mit wenig entionisiertem Wasser und trocknete es dann im Trockenschrank bei 100 °C und Atmosphärendruck bis zur Gewichtskonstanz. Nach Abkühlen auf Raumtemperatur wurde das Sieb erneut gewogen. Der Gehalt an Koagulat ergab sich als Differenz der einzelnen Wägungen, jeweils bezogen auf die filtrierte Menge an wässriger Polymerdispersion.

Die Polymerbeläge an Reaktorwand und Rührer wurden mittels folgender Skala bewertet:
1 = keine Ablagerungen
2 = leichte Ablagerungen
3 = starke Ablagerungen

### Beispiel 1

In einem 120 1-Rührreaktor wurden unter Stickstoffatmosphäre und Atmosphärendruck 15 kg entionisiertes Wasser 0,06 kg Natriumperoxodisulfat und 0,9 kg einer wässrigen Saatlatexdispersion (30 Gew.-% Polystyrolteilchen, zahlenmittlerer Teilchendurchmesser 33 nm) vorgelegt und unter Rühren (MIG-Rührer, 80 Umdrehungen pro Minute) auf 85 °C aufgeheizt. Während 4 Stunden wurde über eine die Mischeinrichtung enthaltende Zulaufleitung die die Monomerenemulsion bildenden Komponenten

| | |
|---|---|
| 22,0 kg | entionisiertes Wasser |
| 1,3 kg | einer 28 gew.-%igen wässrigen Lösung von Texapon® NSO-IS (ethoxiliertes Fettalkoholsulfat; Warenzeichen der Cognis Deutschland GmbH) |
| 1,4 kg | Acrylsäure |
| 1,0 kg | einer 50 gew.-%igen wässrigen Lösung von Acrylamid |
| 29,0 kg | Styrol |
| 17,5 kg | Butadien und |
| 0,9 kg | tert.-Dodecylmercaptan |

und über eine separate Zulaufleitung zeitgleich eine Initiatorlösung, bestehend aus

| | |
|---|---|
| 0,6 kg | Natriumperoxodisulfat und |
| 6,0 kg | entionisiertem Wasser |

der bei 85 °C gerührten Reaktionsmischung zudosiert. Nach Zulaufende ließ man unter Rühren noch 1 Stunde bei Reaktionstemperatur nachreagieren. Anschließend evakuierte man den Rührreaktor bis zu einem Unterdruck von 300 mbar (absolut) während man gleichzeitig 4 bar-Wasser dampf durch die wässrige Polymerdispersion leitete. Nach 1 Stunde wurde die wasserdampf zufuhr unterbrochen, der Unterdruck mit Stickstoff aufgehoben, die Polymerdispersion auf Raumtemperatur abgekühlt und mit einer 20 gew.-%igen wässrigen Natriumhydroxid-Lösung ein pH-Wert von 7 eingestellt. Die wässrige Polymerdispersion wies einen Feststoffgehalt von 50,9 Gew.-% auf.

Die Polymerdispersion sowie der Reaktor und der Rührer wurden wie folgt bewertet:

| Mischeinrichtung | Koagulat >45 [ppm] | Ablagerungen Reaktorwand | Ablagerungen Rührer |
|---|---|---|---|
| Injektordüse | 10 | 1 | 1 |
| statischer Mischer | 30 | 2-3 | 3 |

### Beispiel 2

In einem 120 l-Rührreaktor wurden unter Stickstoffatmosphäre und Atmosphärendruck 12 kg entionisiertes Wasser 0,06 kg Natriumperoxodisulfat und 0,2 kg einer wässrigen Saatlatexdispersion (30 Gew.-% Polystyrolteilchen, zahlenmittlerer Teilchendurchmesser 33 nm) vorgelegt und unter Rühren (MIG-Rührer, 80 Umdrehungen pro Minute) auf 85°C aufgeheizt. Während 3,5 Stunden wurde über eine die Mischeinrichtung enthaltende Zulaufleitung die die Monomerenemulsion bildenden Komponenten

| | |
|---|---|
| 18,0 kg | entionisiertes Wasser |
| 1,9 kg | einer 30 gew.-%igen wässrigen Lösung von Disponil® FES 77 (sulfoniertes Alkylphenolethoxilat; Warenzeichen der Cognis Deutschland GmbH) |
| 1,0 kg | Acrylsäure |
| 5,5 kg | einer 15 gew.-%igen wässrigen Lösung von N-Methylol-Methacrylamid |
| 5,4 kg | Acrylnitril |
| 38,9 kg | 2-Ethylhexylacrylat und |
| 0,8 kg | Styrol |

und während 4 Stunden und 15 Minuten über eine separate Zulaufleitung eine Initiatorlösung, bestehend aus

| | |
|---|---|
| 0,6 kg | Natriumperoxodisulfat und |
| 7,0 kg | entionisiertem Wasser |

der bei 85 °C gerührten Reaktionsmischung zudosiert. Nach Zulaufende ließ man unter Rühren noch 1 Stunde bei Reaktionstemperatur nachreagieren. Anschließend evakuierte man den Rührreaktor bis zu einem Unterdruck von 300 mbar (absolut) während man gleichzeitig 4 bar-Wasserdampf durch die wässrige Polymerdispersion leitete. Nach 1 Stunde wurde die Wasserdampfzufuhr unterbrochen, der Unterdruck mit Stickstoff aufgehoben, die Polymerdispersion auf Raumtemperatur abgekühlt sowie mit wässriger Ammoniak-Lösung ein pH-Wert von 7 eingestellt. Die wässrige Polymerdispersion wies einen Feststoffgehalt von 51,9 Gew.-% auf.

Die Polymerdispersion sowie der Reaktor und der Rührer wurden wie folgt bewertet:

| Mischeinrichtung | Koagulat >45 [ppm] | Ablagerungen Reaktorwand | Ablagerungen Rührer |
|---|---|---|---|
| Injektordüse | 30 | 1 | 1 |
| statischer Mischer | 220 | 3 | 3 |

### Beispiel 3

In einem 120 l-Rührreaktor wurden unter Stickstoffatmosphäre und Atmosphärendruck 12 kg entionisiertes Wasser und 0,15 kg einer wässrigen Saatlatexdispersion (30 Gew.-% Polystyrolteilchen, zahlenmittlerer Teilchendurchmesser 33 nm) vorgelegt und unter Rühren (MIG-Rührer, 80 Umdrehungen pro Minute) auf 80 °C aufgeheizt. Während 4,5 Stunden wurde über eine die Injektordüse enthaltende Zulaufleitung die die Monomerenemulsion bildenden Komponenten

| | |
|---|---|
| 20,0 kg | entionisiertes Wasser |
| 1,3 kg | einer 45 gew.-%igen wässrigen Lösung von Dowfax® 2A1 |
| 2,8 kg | einer 30 gew.-%igen wässrigen Lösung von Disponil® FES 77 |
| 1,3 kg | Acrylsäure |
| 1,4 kg | einer 50 gew.-%igen wässrigen Lösung von Acrylamid |
| 14,0 kg | Vinylacetat |
| 19,0 kg | n-Butylacrylat und |
| 13,0 kg | 2-Ethylhexylacrylat |

und zeitgleich über zwei separate Zulaufleitungen eine Initiatorlösung 1, bestehend aus

| | |
|---|---|
| 2,5 kg | einer 10 gew.-%igen wässrigen Lösung von Ascorbinsäure |

und eine Initiatorlösung 2, bestehend aus

| | |
|---|---|
| 0,3 kg | einer 50 gew.-%igen wässrigen Lösung von wasserstoffperoxid |

der bei 80 °C gerührten Reaktionsmischung zudosiert. In einem Vergleichsversuch wurden die die Monomerenemulsion bildenden Komponenten in einem 100 1-Rührkessel bei Raumtemperatur zu einer stabilen Monomerenemulsion gemischt und dem Polymerisationsgefäß während 4,5 Stunden über eine Zulaufleitung ohne Mischeinrichtung zugeführt. Die Zuführung des Initiatorensystems erfolgte wie zuvor beschrieben.

Nach Zulaufende ließ man unter Rühren noch 1 Stunde bei Reaktionstemperatur nachreagieren. Anschließend evakuierte man den Rührreaktor bis zu einem Unterdruck von 300 mbar (absolut) während man gleichzeitig 4 bar-Wasserdampf durch die wässrige Polymerdispersion leitete. Nach 1 Stunde wurde die Wasserdampfzufuhr unterbrochen und der Unterdruck mit Stickstoff aufgehoben, die Polymerdispersion auf Raumtemperatur abgekühlt sowie mit einer 20 gew.-%igen wässrigen Natriumhydroxid-Lösung ein pH-Wert von 7 eingestellt. Die wässrige Polymerdispersion wies einen Feststoffgehalt von 56,1 Gew.-% auf.

Die Polymerdispersion sowie der Reaktor und der Rührer wurden wie folgt bewertet:

| Mischeinrichtung | Koagulat > 45 [ppm] | Ablagerungen Reaktorwand | Ablagerungen Rührer |
|---|---|---|---|
| Injektordüse | 40 | 1 | 1 |
| Rührkessel | 70 | 2-3 | 2-3 |

Wie die Ergebnisse der erfindungsgemäßen Versuche im Vergleich zu den Vergleichsversuchen belegen, werden bei Verwendung einer Düse deutlich geringere Koagulatgehalte der wässrigen Polymerdispersionen sowie deutlich geringere Ablagerungen an Reaktorwänden und Rührern erhalten.

## Patentansprüche

1. Verfahren zur Herstellung einer wässrigen Polymerdispersion durch radikalische Emulsionspolymerisation einer wässrigen Monomerenemulsion, wobei die Monomerenemulsion nach Maßgabe des Verbrauchs kontinuierlich durch Vermischen ihrer Komponenten mittels einer Mischvorrichtung hergestellt wird, **dadurch gekennzeichnet, dass** die Mischvorrichtung wenigstens eine Düse, ausgewählt aus Vollkegeldüse, Hohlkegeldüse, Flachstrahldüse, Glattstrahldüse, Injektordüse, Ejektordüse, Spiraldüse, Prallstrahldüse, Zweistoffdüse oder Emulgierblende, umfasst.

2. Verfahren nach Anspruch 1, **dadurch gekennzeichnet, dass** die Mischvorrichtung wenigstens eine Düse und eine Mischkammer umfasst.

3. Verfahren nach Anspruch 2, **dadurch gekennzeichnet, dass** die Komponenten der wässrigen Monomerenemulsion zuerst durch eine Düse und daran anschließend durch eine Mischkammer geleitet werden.

4. Verfahren nach einem der Ansprüche 1 bis 3, **dadurch gekennzeichnet, dass** die Druckdifferenz zwischen Düseneintritts- und Düsenaustrittsöffnung wenigstens 0,5 bar beträgt.

5. Verfahren nach einem der Ansprüche 1 bis 4, **dadurch gekennzeichnet, dass** an der Düsenaustrittsöffnung ein Diffusor angebracht ist.

6. Verfahren nach Anspruch 5, **dadurch gekennzeichnet, dass** der Diffusor eine oder mehrere Öffnungen aufweist.

7. Verfahren nach einem der Ansprüche 2 bis 6, **dadurch gekennzeichnet, dass** die minimale Querschnittsfläche der Mischkammer wenigstens das 200-fache der Düsenquerschnittsfläche und deren minimale Länge wenigstens das 20-fache der Quadratwurzel der Düsenquerschnittsfläche ist.

8. Verfahren nach einem der vorhergehenden Ansprüche, **dadurch gekennzeichnet, dass** die wässrige Monomerenemulsion
a) wenigstens ein ethylenisch ungesättigtes Monomer,
b) wenigstens ein Dispergiermittel,
c) gegebenenfalls wenigstens einen zur Initiierung wässriger Emulsionspolymerisationen geeigneten Initiator und
d) gegebenenfalls weitere Additive
umfasst.

9. Verfahren nach Anspruch 8, **dadurch gekennzeichnet, dass** das wenigstens eine ethylenisch ungesättigte Monomere ausgewählt ist aus Estern ethylenisch ungesättigter C₃- bis C₆-Mono- oder Dicarbonsäuren mit C₁- bis C₂₀-Alkanolen, bevorzugt Alkylacrylaten und Alkylmethacrylaten, Vinylestern von C₁- bis C₂₀-Monocarbonsäuren, Vinylaromaten, ethylenisch ungesättigten Nitrilen, Vinylhalogeniden, C₁- bis C₂₀-Alkylvinylethern, aliphatischen Kohlenwasserstoffen mit 2 bis 8 Kohlenstoffatomen und 1 oder 2 Doppelbindungen, ethylenisch ungesättigten C₃- bis C₆-Mono- oder Dicarbonsäuren und deren Amiden, N-Vinyllactamen sowie ethylenisch ungesättigten Alkyl- oder Arylsulfonsäuren.

10. Verfahren nach einem der Ansprüche 8 oder 9, **dadurch gekennzeichnet, dass** das wenigstens eine Monomere ausgewählt ist aus C₁- bis C₁₂-Alkylacrylaten, beispielsweise *n*-Butyl- oder 2-Ethylhexylacrylat, C₁- bis C₁₂-Alkylmethacrylaten, wie Methylmethacrylat, Vinylformiat, Vinylacetat, Vinylpropionat, Styrol, α-Methylstyrol, Acrylnitril, Methacrylnitril, Acrylsäure, Methacrylsäure, Acrylamid, Methacrylamid, Vinylchlorid, Vinylethylether, Ethylen, Propylen, Butadien, Isopren und N-Vinylpyrrolidon.

## Claims

1. A process for preparing an aqueous polymer dispersion by free-radical emulsion polymerization of an aqueous monomer emulsion prepared continuously at the rate of its consumption using a mixing means to mix its components, wherein said mixing means comprise at least one nozzle selected from solid cone nozzle, hollow cone nozzle, fan jet nozzle, smooth jet nozzle, injector nozzle, ejector nozzle, spiral nozzle, impingement jet nozzle, and two-fluid nozzle or emulsifying baffle.

2. A process as claimed in claim 1, wherein said mixing means comprise at least one nozzle and a mixing chamber.

3. A process as claimed in claim 2, wherein the components of the aqueous monomer emulsion are passed first through a nozzle and then through a mixing chamber.

4. A process as claimed in any of claims 1 to 3, wherein the pressure difference between nozzle inlet aperture and nozzle outlet aperture is at least 0.5 bar.

5. A process as claimed in any of claims 1 to 4, wherein a diffusor is mounted at the nozzle outlet aperture.

6. A process as claimed in claim 5, wherein the diffusor has one or more apertures.

7. A process as claimed in any of claims 2 to 6, wherein the minimum cross-sectional area of the mixing chamber is at least 200 times the nozzle cross-sectional area and its minimum length is at least 20 times the square root of the nozzle cross-sectional area.

8. A process as claimed in any of the preceding claims, wherein said aqueous monomer emulsion comprises
a) at least one ethylenically unsaturated monomer,
b) at least one dispersant,
c) if desired, at least one initiator apt to initiate aqueous emulsion polymerizations, and
d) if desired, further additives.

9. A process as claimed in claim 8, wherein at least one ethylenically unsaturated monomer is selected from esters of ethylenically unsaturated C₃ to C₆ monocarboxylic or dicarboxylic acids with C₁ to C₂₀ alkanols, preferably alkyl acrylates and alkyl methacrylates, vinyl esters of C₁ to C₂₀ monocarboxylic acids, vinylaromatics, ethylenically unsaturated nitriles, vinyl halides, C₁ to C₂₀ alkyl vinyl ethers, aliphatic hydrocarbons having from 2 to 8 carbon atoms and 1 or 2 double bonds, ethylenically unsaturated C₃ to C₆ monocarboxylic or dicarboxylic acids and their amides, N-vinyllactams, and ethylenically unsaturated alkyl- or arylsulfonic acids.

10. A process as claimed in either of claims 8 and 9, wherein said at least one monomer is selected from C₁ to C₁₂ alkyl acrylates, examples being n-butyl and 2-ethylhexyl acrylate, C₁ to C₁₂ alkyl methacrylates, such as methyl methacrylate, vinyl formate, vinyl acetate, vinyl propionate, styrene, α-methylstyrene, acrylonitrile, methacrylonitrile, acrylic acid, methacrylic acid, acrylamide, methacrylamide, vinyl chloride, vinyl ethyl ether, ethylene, propylene, butadiene, isoprene, and N-vinylpyrrolidone.

## Revendications

1. Procédé de préparation d'une dispersion aqueuse de polymère par polymérisation radicalaire en émulsion d'une émulsion aqueuse de monomère, dans lequel l'émulsion de monomère est, en fonction de la consommation, préparée en continu par mélange de ses composants au moyen d'un dispositif de mélange, **caractérisé en ce que** le dispositif de mélange comporte au moins une tuyère choisie parmi une tuyère à cône plein, une tuyère à cône creux, une tuyère à jet laminaire, une tuyère à jet uni, une tuyère d'injection, une tuyère d'éjection, une tuyère hélicoïdale, une tuyère à jets concourants, une tuyère à deux matières ou une ouverture d'émulsion.

2. Procédé suivant la revendication 1, **caractérisé en ce que** le dispositif de mélange comporte au moins une tuyère et une chambre de mélange.

3. Procédé suivant la revendication 2, **caractérisé en ce que** les composants de l'émulsion aqueuse de monomère sont conduits tout d'abord au travers d'une tuyère et ensuite à travers une chambre de mélange.

4. Procédé suivant l'une des revendications 1 à 3, **caractérisé en ce que** la différence de pression entre l'ouverture d'entrée de la tuyère et l'ouverture de sortie de celle-ci est d'au moins 0,5 bar.

5. Procédé suivant l'une des revendications 1 à 4, **caractérisé en ce qu'**un diffuseur est agencé à l'ouverture de sortie de la tuyère.

6. Procédé suivant la revendication 5, **caractérisé en ce que** le diffuseur présente un ou plusieurs orifices.

7. Procédé suivant l'une des revendications 2 à 6, **caractérisé en ce que** la surface minimale en section transversale de la chambre de mélange est d'au moins 200 fois la surface en section transversale de la tuyère et **en ce que** sa longueur minimale est d'au moins 20 fois la racine carrée de la surface en section transversale de la tuyère.

8. Procédé suivant l'une des revendications précédentes, **caractérisé en ce que** l'émulsion aqueuse de monomère comporte
a) au moins un monomère éthyléniquement insaturé,
b) au moins un agent dispersant,
c) éventuellement au moins un amorceur approprié pour amorcer des polymérisations en émulsion aqueuses, et
d) éventuellement d'autres additifs.

9. Procédé suivant la revendication 8, **caractérisé en ce que** l'au moins un monomère éthyléniquement insaturé est choisi parmi des esters d'acides mono- ou di-carboxyliques en C₃-C₆ éthyléniquement insaturés avec des alcanols en C₁-C₂₀, de préférence des acrylates d'alkyle et des méthacrylates d'alkyle, des esters vinyliques d'acides monocarboxyliques en C₁-C₂₀, des substances vinylaromatiques, des nitriles éthyléniquement insaturés, des halogénures de vinyle, des éthers alkylvinyliques en C₁-C₂₀, des hydrocarbures aliphatiques comportant 2 à 8 atomes de carbone et 1 ou 2 doubles liaisons, des acides monocarboxyliques ou dicarboxyliques en C₃-C₆ éthyléniquement insaturés et leurs amides, des N-vinyllactames ainsi que des acides alkylsulfoniques ou arylsulfoniques éthyléniquement insaturés.

10. Procédé suivant l'une des revendications 8 et 9, **caractérisé en ce que** ledit au moins un monomère est choisi parmi des acrylates d'alkyle en C₁-C₁₂, par exemple de l'acrylate de n-butyle ou de 2-éthylhexyle, des méthacrylates d'alkyle en C₁-C₁₂, comme du méthacrylate de méthyle, du formiate de vinyle, de l'acétate de vinyle, du propionate de vinyle, du styrène, de l'α-méthylstyrène, de l'acrylonitrile, du méthacrylonitrile, de l'acide acrylique, de l'acide méthacrylique, de l'acrylamide, du méthacrylamide, du chlorure de vinyle, de l'éther vinyléthylique, de l'éthylène, du propylène, du butadiène, de l'isoprène et de la N-vinylpyrrolidone.
